(19) **Europäisches Patentamt / European Patent Office / Office européen des brevets**

(11) **EP 4 625 661 A1**

(12) **EUROPEAN PATENT APPLICATION**
published in accordance with Art. 153(4) EPC

(43) Date of publication:
01.10.2025 Bulletin 2025/40

(21) Application number: 24749759.7

(22) Date of filing: 02.02.2024

(51) International Patent Classification (IPC):
*H01M 50/282* (2021.01)

(52) Cooperative Patent Classification (CPC):
B60L 50/64; H01M 10/615; H01M 10/625;
H01M 50/233; H01M 50/236; H01M 50/24;
H01M 50/249; H01M 50/276; H01M 50/28;
H01M 50/282; H01M 50/593; Y02E 60/10

(86) International application number:
PCT/CN2024/075573

(87) International publication number:
WO 2024/160284 (08.08.2024 Gazette 2024/32)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 02.02.2023 CN 202310131426

(71) Applicant: **BYD Company Limited**
**Shenzhen, Guangdong 518118 (CN)**

(72) Inventors:
• **TAN, Zhijia**
**Shenzhen, Guangdong 518118 (CN)**

• **WAN, Long**
**Shenzhen, Guangdong 518118 (CN)**
• **YANG, Fan**
**Shenzhen, Guangdong 518118 (CN)**
• **PENG, Qingbo**
**Shenzhen, Guangdong 518118 (CN)**
• **LU, Peng**
**Shenzhen, Guangdong 518118 (CN)**

(74) Representative: **Taor, Simon Edward William et al**
**Venner Shipley LLP**
**200 Aldersgate**
**London EC1A 4HD (GB)**

(54) **BATTERY PACK COVER PLATE, BATTERY PACK, AND VEHICLE**

(57) This application discloses a battery pack cover, a battery pack, and a vehicle. The battery pack cover (100) includes: a first substrate (10), where a thickness of the first substrate (10) is $a_1$, in mm, and a yield strength of the first substrate (10) is $b_1$, in MPa; and a second substrate (20), where the second substrate (20) is a composite material plate, the second substrate (20) is located on a surface on a side of the first substrate (10), a thickness of the second substrate (20) is $a_2$, in mm, and a tensile strength of the second substrate (20) is $b_2$, in MPa, where the first substrate (10) and the second substrate (20) satisfy the following condition: $290 \leq a_1 \cdot b_1 + a_2 \cdot b_2 \cdot c_1 \leq 1200$, where $c_1$ is a constant.

FIG. 2

## Description

### CROSS-REFERENCE TO RELATED APPLICATIONS

This application claims priority and benefits to Chinese Patent Application No. 202310131426.X, filed with the China National Intellectual Property Administration on February 2, 2023, which is incorporated herein by reference in its entirety.

### TECHNICAL FIELD

This application relates to the field of vehicles, and in particular, to a battery pack cover, a battery pack, and a vehicle.

### BACKGROUND

In the field of power batteries, design of various package structures effectively reduces a quantity of power battery components and improves space utilization of the batteries. However, existing package structures still have problems such as large sizes, heavy weights, and inconvenience to be highly integrated with vehicles.

Therefore, current battery pack covers, battery packs and vehicles still need to be improved.

### SUMMARY

This application aims to alleviate or resolve at least one of the above mentioned problems to at least some extent.

In one aspect of this application, this application proposes a battery pack cover, including: a first substrate, where a thickness of the first substrate is $a_1$, in mm, and a yield strength of the first substrate is $b_1$, in MPa; and a second substrate, where the second substrate is a composite material plate, the second substrate is located on a surface on a side of the first substrate, a thickness of the second substrate is $a_2$, in mm, and a tensile strength of the second substrate is $b_2$, in MPa, where the first substrate and the second substrate satisfy the following condition: $290 \leq a_1 \cdot b_1 + a_2 \cdot b_2 \cdot c_1 \leq 1200$, where $c_1$ is a constant. Therefore, the battery pack cover has good pressure bearing effect and may be used as a sealing structure for the battery pack. In addition, the battery pack cover has good supporting performance and may be used as a vehicle body floor structure, so that the battery pack cover can be highly integrated with the vehicle body floor. This saves installation space, reduces a weight of an entire vehicle, and satisfies a safety requirement under an extreme working condition.

In another aspect of this application, this application proposes a battery pack, including a battery, a tray, and the aforementioned battery pack cover, where the battery pack cover and the tray are connected to form an accommodation cavity for accommodating the battery. Therefore, the battery pack has all the features and advantages of the aforementioned battery pack cover. Details are not described herein again.

In still another aspect of this application, this application provides a vehicle, including a vehicle body floor, where the vehicle body floor includes the aforementioned battery pack cover. Therefore, the vehicle has all the features and advantages of the aforementioned battery pack cover. Details are not described herein again.

### BRIEF DESCRIPTION OF DRAWINGS

The above and/or additional aspects and advantages of this application will become apparent and easily understood from descriptions of embodiments with reference to the following drawings, in which:

FIG. 1 shows a diagram of a structure of a vehicle body chassis assembly according to an embodiment of this application;
FIG. 2 shows a diagram of a structure of a battery pack cover according to an embodiment of this application;
FIG. 3 shows a diagram of a structure of a battery pack cover according to an embodiment of this application;
FIG. 4 shows a diagram of a structure of a battery pack cover according to an embodiment of this application;
FIG. 5 shows a diagram of a structure of a battery pack cover according to an embodiment of this application; and
FIG. 6 shows a diagram of a structure of a reinforcement fiber within a composite material plate according to an embodiment of this application.

Reference numerals:
first substrate 10; second substrate 20; third substrate 30; battery pack cover 100; metal sub-plate 111; third composite material plate 123; functional module 200; tray 300.

**DESCRIPTION OF EMBODIMENTS**

Embodiments of this application are described in detail below, examples of which are shown in the accompanying drawings, where the same or similar reference numerals represent the same or similar elements or elements having the same or similar functions throughout. Embodiments described below with reference to the accompanying drawings are exemplary and are merely used to explain this application, and should not be construed as limiting this application.

In one aspect of this application, this application proposes a battery pack cover 100, including: a first substrate 10, where a thickness of the first substrate 10 is $a_1$, in mm, and a yield strength of the first substrate 10 is $b_1$, in MPa; and a second substrate 20, where the second substrate 20 is a composite material plate, the second substrate 20 is located on a surface on a side of the first substrate 10, a thickness of the second substrate 20 is $a_2$, in mm, and a tensile strength of the second substrate 20 is $b_2$, in MPa. In this application, the inventor found through detailed theoretical analysis and experimental research that a strength of the battery pack cover 100 is mainly limited by a strength and a thickness of a material. The first substrate 10 and the second substrate 20 satisfy the following condition: $290 \leq a_1 \cdot b_1 + a_2 \cdot b_2 \cdot c_1 \leq 1200$, where $c_1$ is a constant. Within a range of this strength formula, the battery pack cover 100 can satisfy a requirement of deformation less than 2 mm when squeezed. The battery pack cover 100 has a high anti-extrusion strength and may be used as a sealing structure for the battery pack. In addition, the battery pack cover has good supporting performance and may be used as a vehicle body floor structure, so that the battery pack cover 100 can be highly integrated with the vehicle body floor. This saves installation space, reduces a weight of an entire vehicle, and satisfies a safety requirement under an extreme working condition.

According to some embodiments of this application, the first substrate 10 and the second substrate 20 satisfy the following condition: $320 \leq a_1 \cdot b_1 + a_2 \cdot b_2 \cdot c_1 \leq 1000$.

According to some embodiments of this application, the thickness $a_1$ of the first substrate 10 may be 0.5 mm to 2.4 mm. When the thickness of the first substrate 10 is 0.5 mm to 2.4 mm, the first substrate 10 has higher strength and better load-bearing support effect, occupies less space, and has less impact on the weight of the entire vehicle.

According to some embodiments of this application, to ensure voltage withstand performance of the battery pack cover 100, the yield strength $b_1$ of the first substrate 10 may be 220 MPa to 800 MPa. According to some other embodiments of this application, when the first substrate 10 is a metal plate or includes a metal plate, the yield strength of the metal plate may be 220 MPa to 800 MPa. Specifically, the metal plate may be a galvanized steel plate. A surface of a steel plate can be effectively prevented from corrosion by coating a surface of the steel plate with a layer of metallic zinc, thereby extending its service life. Further, a thickness of a zinc coating layer of the galvanized steel plate may be 40 g/m$^2$ to 80 g/m$^2$. The battery pack cover 100 may have a better load-bearing support function through configuration of the metal plate.

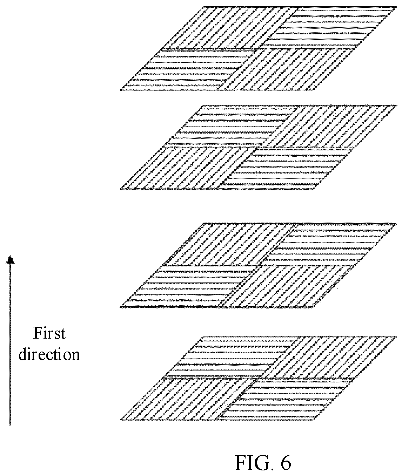

According to some embodiments of this application, the second substrate 20 may be a composite material plate. The composite material plate may be a resin-based composite material plate. The composite material plate has a lower thermal conductivity than the metal plate and has better thermal insulation performance. The composite material plate further has electrical insulation properties and can effectively satisfy a high-voltage safety requirement of the battery pack cover 100. The composite material plate includes a matrix resin and a reinforcement fiber. For example, the matrix resin of the composite material plate may include at least one of epoxy resin, polyamide resin, polyurethane resin, polyimide resin, polysulfone resin, and phenolic resin. According to some other embodiments of this application, the reinforcement fiber may be a fiber material having a melting point of 700 °C or higher. Specifically, the reinforcement fiber may include at least one of a glass fiber and a ceramic fiber. Refer to FIG. 6. Because the reinforcement fiber within the composite material plate is arranged in a fabric layup with good fabric anisotropic performance, the reinforcement fiber within the composite material plate may be in a stacking manner including but not limited to that shown in FIG. 6. The glass fiber is used as an example. Orientations of adjacent glass fibers in a same fiber layer may be perpendicular to each other, thereby effectively improving support performance and tensile strength of the composite material plate. An included angle between orientations of glass fibers in adjacent fiber layers stacked in a first direction is not particularly limited. A person skilled in the art may adjust the included angle between the orientations of the glass fibers in the adjacent fiber layers based on an actual condition.

According to some embodiments of this application, the second substrate 20 is a composite material plate, and the composite material plate is formed by hot pressing. Hot pressing may cause changes in an orientation of the reinforcement fiber in the composite material plate, such as fiber displacement, transitioning from a unidirectional continuous state to a free state. This consequently leads to strength attenuation of the fiber. In view of a strength difference before and after molding of the composite material plate, a constant c is introduced to reflect strength attenuation of the composite material plate before and after hot pressing. Value of the constant c = tensile strength of plate after molding/tensile strength of plate before molding. Therefore, a larger constant c indicates less strength attenuation of the composite material plate. Specifically, for a resin-based composite material plate, the constant c is usually 0.5 to 0.9. From a process perspective, the constant c is a process reliability value, and a test method for the constant c can be performed based on the test method for tensile strength. It may be understood that the definition of the constant c here applies to $c_1$ and $c_2$.

According to some embodiments of this application, the thickness of the second substrate 20 may be 0.6 mm to 2 mm. When the thickness of the second substrate 20 is 0.6 mm to 2 mm, the thickness of the second substrate 20 is moderate, and the battery pack cover 100 occupies a small space. In the event of thermal runaway, such as flame burning, corresponding physical isolation may be formed, and breakdown voltage withstand performance of the battery pack cover 100 may be effectively improved through a physical gap.

According to some embodiments of this application, the tensile strength of the second substrate 20 should at least satisfy requirements for supporting adjacent panels and withstanding foot traffic inside the vehicle. For example, the tensile strength $b_2$ of the second substrate 20 may be 240 MPa to 550 MPa.

According to some embodiments of this application, the second substrate 20 is the composite material plate, with the reinforcement fibers arranged therein in a certain degree of nonuniformity. Specifically, for example, $c_1$ may be 0.5 to 0.9. The composite material plate is incorporated as the second substrate 20, so that the battery pack cover 100 can achieve both thermal insulation and structural support, while preventing arcing in the event of cell failure.

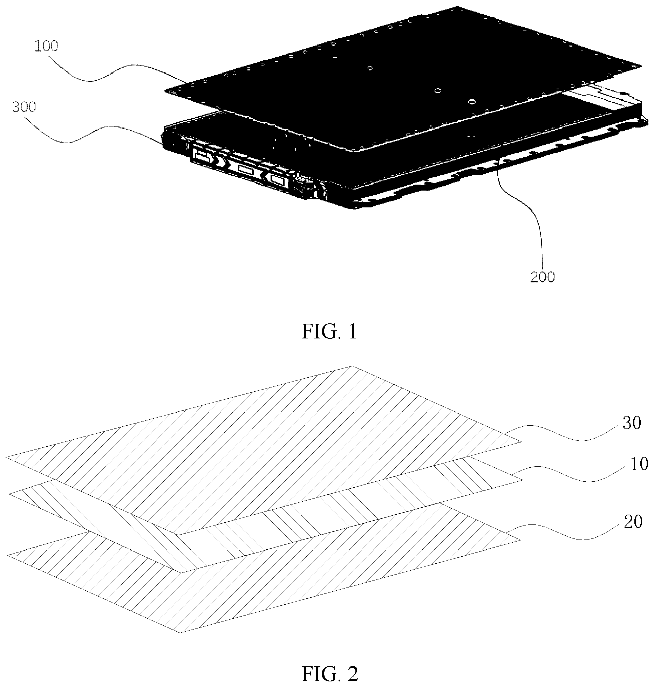

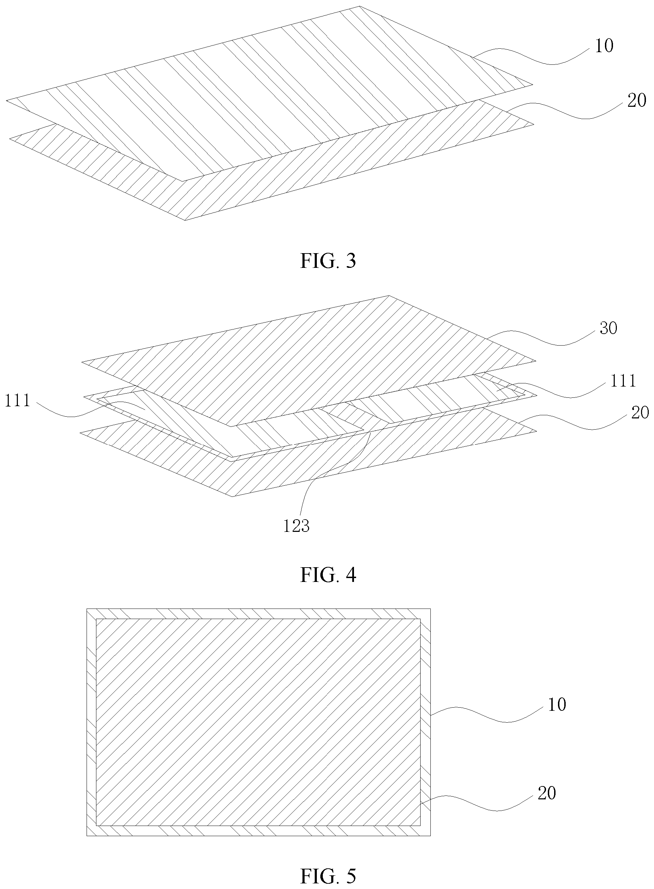

Refer to FIG. 2 and FIG. 3. According to some embodiments of this application, the first substrate 10 may be a whole layer of metal plate. Refer to FIG. 3. When the first substrate 10 is the whole layer of metal plate, the second substrate 20 may be located only on a surface on a side of the metal plate, and the second substrate 20 may be a composite material plate. In this case, a surface on a side that is of the metal plate and that is away from the composite material plate may have an anti-corrosion layer, and the anti-corrosion layer may be made of an epoxy resin. During actual use, the composite material plate may be disposed toward a functional module, such as toward a battery module. The composite material plate is used to cover the metal plate on a side, and a surface on a side of the metal plate not covered by the composite material plate may be formed with an anti-corrosion layer through an electrophoresis process to ensure anti-corrosion performance of the metal plate, thereby satisfying requirements for electrical insulation performance and strength of the battery pack cover 100.

According to some embodiments of this application, when the first substrate 10 is a whole layer of metal plate and the second substrate 20 is located on a surface on a side of the metal plate, an orthographic projection of the second substrate 20 onto the first substrate 10 may be located inside the first substrate 10. The second substrate 20 may be a composite material plate, that is, the composite material plate is disposed on a partial region of a surface on at least one side of the metal plate, and the composite material plate may correspond to an upper surface of the battery. Specifically, refer to FIG. 5. The composite material plate (namely, the second substrate 20) is disposed on the partial region of the surface on the side of the metal plate (namely, the first substrate 10), and surface anti-corrosion treatment such as electrophoresis is performed on a surface that is of the metal plate and that is not covered by the composite material plate, thereby covering the composite material plate on the upper surface of the battery. This improves thermal insulation performance of the battery pack cover 100, and effectively prevents arcing upon short circuit and thermal runaway. Therefore, during manufacturing of the metal plate, a hole structure for fastening the battery pack cover 100 only needs to be formed in an edge region of the metal plate through a processing process such as a stamping process, and the second substrate 20 is disposed in a region that does not block the hole structure. After the second substrate 20 is fastened to the first substrate 10 through hot pressing or gluing, no hole structure needs to be formed on the second substrate 20 again through a stamping process. This simplifies a process flow and improves a product yield. According to some other embodiments of this application, when the composite material plate is disposed on the partial region of the surface on the side of the metal plate, a width of the region that is on the surface of the metal plate and that is not covered by the composite material plate may be 10 mm to 40 mm, thereby leaving a processing region enough for the hole structure for fastening. The surface of the metal plate may further have the anti-corrosion layer, which may be made of an epoxy resin. This can satisfy requirements for thermal insulation performance and electrical insulation performance of the battery pack cover 100. When the battery pack cover 100 is used as a vehicle body floor, it is beneficial to a fixed connection between the vehicle body floor and a tray.

According to some embodiments of this application, the anti-corrosion layer formed by the electrophoretic process can improve the anti-corrosion performance of the metal plate. For example, the electrophoretic process may include pretreatment, acid cleaning, alkaline cleaning, phosphating, epoxy coating, electrophoretic paint deposition, baking, and the like of the metal plate.

In the descriptions of this application, "a plurality of" means two or more. It may be understood that when the first substrate 10 is a metal plate, a yield strength of the metal plate is the yield strength of the first substrate 10. When a reinforcement structure is arranged around the first substrate 10, a yield strength of the first substrate 10 is still the yield strength of the metal plate because the first substrate is squeezed in a Z-axis direction in a strength test using a column, and a maximum yield strength (at the metal plate) is usually taken for the extrusion resistance test.

According to some embodiments of this application, the battery pack cover 100 may further include a third substrate 30, where the third substrate 30 is a composite material plate. The third substrate 30 is located on a surface on a side that is of the first substrate 10 and that is away from the second substrate 20, that is, the first substrate 10 is sandwiched between the second substrate 20 and the third substrate 30. A thickness $a_3$ (in mm), a tensile strength $b_3$ (in MPa), and $c_2$ of the third substrate 30 satisfy $290 \leq a_1 \cdot b_1 + a_2 \cdot b_2 \cdot c_1 + a_3 \cdot b_3 \cdot c_2 \leq 1200$, and preferably, satisfy the following

condition: $320 \leq a_1 \cdot b_1 + a_2 \cdot b_2 \cdot c_1 + a_3 \cdot b_3 \cdot c_2 \leq 1000$.

According to some embodiments of this application, the thickness $a_3$ of the third substrate 30 may be 0.6 mm to 2 mm. When the thickness of the third substrate 30 is 0.6 mm to 2 mm, the thickness of the third substrate 30 is moderate, and the battery pack cover 100 occupies a small space. In the event of thermal runaway, such as flame burning, corresponding physical isolation may be formed, and breakdown voltage withstand performance of the battery pack cover 100 may be effectively improved through a physical gap.

According to some embodiments of this application, when the metal plate and the composite material plate are stacked, the third substrate 30 can play a certain role in supporting adjacent panels and withstanding foot traffic inside the vehicle. For example, the tensile strength $b_3$ of the third substrate 20 may be 240 MPa to 550 MPa.

According to some embodiments of this application, the third substrate 30 is the composite material plate, with the reinforcement fibers arranged therein in a certain degree of nonuniformity. Specifically, for example, $c_2$ of the third substrate 30 may be 0.5 to 0.9.

Refer to FIG. 2. According to some embodiments of this application, when the first substrate 10 is a whole layer of metal plate, the metal plate may be sandwiched between a first composite material plate (namely, the second substrate 20) and a second composite material plate (namely, the third substrate 30). Two composite material plates are used to completely cover an upper surface and a lower surface of the metal plate, so that overall stiffness of the battery pack cover 100 can be effectively improved. The composite material plates may further effectively isolate the metal plate from a complex external environment to achieve anti-corrosion effect. According to some other embodiments of this application, when the metal plate is sandwiched between the first composite material plate (namely, the second substrate 20) and the second composite material plate (namely, the third substrate 30), a size of the metal plate needs to be smaller than a size of the composite material plate, to achieve complete covering of the metal plate by the composite material plate. According to some embodiments of this application, a distance between an edge of the orthographic projection of the metal plate onto the first composite material plate and an edge of the first composite material plate may be 2 mm to 10 mm. In this way, edge sealing of the metal plate and physical isolation of the metal plate from the outside world can be achieved while satisfying requirements for electrical insulation performance and strength of the battery pack cover 100, thereby preventing the metal plate from rusting and corroding.

According to some embodiments of this application, the battery pack cover 100 may further include a reinforcement structure, the reinforcement structure is a composite material plate, and the reinforcement structure is at least partially disposed around the metal plate. Specifically, refer to FIG. 4. The composite material plate may include a first composite material plate (namely, the second substrate 20) and a second composite material plate (namely, the third substrate 30). The metal plate may include at least one metal sub-plate 111, and a third composite material plate 123 (namely, the reinforcement structure) in a frame structure is disposed around the metal sub-plate 111. The metal plate (including the at least one metal sub-plate 111) and the third composite material plate 123 together form an intermediate plate, and the intermediate plate is sandwiched between the first composite material plate (namely, the second substrate 20) and the second composite material plate (namely, the third substrate 30). Two composite material plates are used to completely cover an upper surface and a lower surface of the metal plate, so that overall stiffness of the battery pack cover 100 can be effectively improved. The composite material plates may further effectively isolate the metal plate from a complex external environment to achieve anti-corrosion effect. In addition, the metal plate is divided into a plurality of metal sub-plates that are fastened to each other through the third composite material plate, so that an overall weight of the battery pack cover 100 can be effectively reduced. During assembly of the battery pack cover 100, a hanging point may be disposed on a third composite material plate to avoid corrosion and rust of the metal plate due to cutting. In addition, the hanging point is disposed on the third composite material plate, to fasten the battery pack cover 100, and a metal processing technology required for a whole layer of metal plate structure can be eliminated, thereby significantly reducing preparation costs.

According to some embodiments of this application, a distance between an edge of the metal sub-plate and an outer edge of the third composite material plate is 10 mm to 50 mm, to achieve corrosion protection of the edges and ensure overall rigidity of the upper cover. The outer edge of the third composite material plate 123 is an edge of a side that is of the third composite material plate 123 and that is away from the metal sub-plate 111. In this way, edge sealing of the metal plate and physical isolation of the metal plate from the outside world can be achieved while satisfying requirements for electrical insulation performance and strength of the battery pack cover 100, thereby preventing the metal plate from rusting and corroding.

The battery pack cover 100 in this application has at least the following advantages:

1. In this application, composite formation of the metal plate with the high-strength high-modulus composite material plate substantially improves strength and stiffness of the battery pack cover 100, thereby achieving better protection for a cell against squeezing of the battery pack cover 100.

2. Because the thermal conductivity of the composite material plate is lower than that of the metal plate, the battery pack cover 100 in this application has higher thermal resistance than a pure-metal battery pack cover 100, and has better thermal insulation performance. This effectively resolves the problem of low power of the battery pack at a low temperature.

3. Because a surface, which is in contact with a live component inside the battery pack, of the battery pack cover 100 in this application is a composite material plate, electrical insulation properties of the composite material plate can satisfy a high voltage safety requirement and prevent a risk of arcing caused by a small electrical gap.

4. When the battery pack experiences thermal runaway, a protective layer on a metal surface of a conventional metal battery pack cover 100 falls off when burned by flames, resulting in exposed metal. When the battery pack cover 100 in this application is burned by flames, a reinforcement fiber of the battery pack cover may achieve physical isolation, thereby preventing arcing and breakdown caused by contact between the metal plate and a conductor, and improving safety of a passenger in a cabin.

In the descriptions of this application, it should be understood that an orientation or a position relationship indicated by the terms "width", "thickness", "up", "down", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, regardless of whether the word "about" or "approximately" is used, all numbers disclosed herein are approximate values. A value of each number may differ by less than 10% or by a difference that is considered reasonable by a person skilled in the art, such as 1%, 2%, 3%, 4%, or 5%.

According to some embodiments of this application, the functional module may include a battery module. Specifically, the functional module may include at least one of a cell, the battery module, and a battery pack.

According to some embodiments of this application, the method for combining and fastening the metal plate with the composite material plate in this application is not particularly limited. For example, a hot pressing process may be used to cause the composite material plate to flow and fill the surface of the metal plate during hot pressing, and then be fastened to the metal plate after curing, thereby achieving composite formation of the metal plate with the composite material plate.

According to some embodiments of this application, a method for measuring a thickness of a substrate may include: measuring the thickness of the substrate using a vernier scale.

According to some embodiments of this application, a method for measuring a yield strength of a substrate includes: performing a test according to the GB/T 228 test standard.

According to some embodiments of this application, a method for measuring a tensile strength of a substrate may include: performing a test according to the GB/T 1447 test standard.

In another aspect of this application, this application proposes a battery pack, including a battery, a tray, and the aforementioned battery pack cover 100, where the battery pack cover 100 and the tray are connected to form an accommodation cavity for accommodating the battery. Therefore, the battery pack has all the features and advantages of the aforementioned battery pack cover 100. Details are not described herein again.

According to some embodiments of this application, the second substrate 20 may be disposed toward the accommodation cavity in the battery pack, so that good thermal insulation performance and electrical insulation performance of the second substrate 20 can be utilized to improve structural stability and safety performance of the battery pack.

In still another aspect of this application, this application provides a vehicle, including a vehicle body floor, where the vehicle body floor includes the aforementioned battery pack cover 100. Therefore, the vehicle has all the features and advantages of the aforementioned battery pack cover 100. Details are not described herein again.

Refer to FIG. 1. According to some embodiments of this application, the vehicle may include a vehicle body chassis assembly, and the vehicle body chassis assembly includes a vehicle body floor, a functional module 200, and a tray 300. The vehicle body floor and the tray 300 sandwich the functional module 200, and the vehicle body floor and the tray are connected to form an accommodation cavity for accommodating the functional module.

According to some embodiments of this application, the metal plate shall cover the functional module as much as possible, for example, the area of the metal plate may be consistent with a cross-sectional area of the functional module, thereby effectively improving pedal strength of the vehicle body floor.

According to some embodiments of this application, silicone foam may be used to fit and compress the surface of the vehicle body floor and a bottom beam of the entire vehicle to achieve sealing effect.

According to some embodiments of this application, the functional module may include a battery module. Specifically, the functional module may include at least one of a cell, the battery module, and a battery pack.

The solution of this application is described below by using specific embodiments. It should be noted that the following embodiments are merely used to illustrate this application and should not be considered as limiting the scope of this application. If no specific techniques or conditions are specified in embodiments, the techniques or conditions described in literature in the art or product instructions shall be followed. Reagents and instruments used without indicating a manufacturer are all conventional products that can be purchased commercially.

Structures of battery pack covers in Examples 1 to 14 and 19 are shown in FIG. 3, in which a second substrate covers a surface on a side of a first substrate. Structures of battery pack covers in Examples 15 and 16 are shown in FIG. 2, in which a first substrate is sandwiched between a second substrate and a third substrate. A structure of a battery pack cover in Example 17 is shown in FIG. 4, in which a first substrate is sandwiched between a second substrate and a third substrate, the first substrate includes two metal sub-plates, and a reinforcement structure is disposed around the metal sub-plates. A structure of the battery pack cover in Example 18 is shown in FIG. 5, in which a second substrate is disposed on a partial region of a surface on a side of a first substrate.

Structures of battery pack covers in Comparative Examples 1 and 2 are shown in FIG. 3, in which a second substrate covers a surface on a side of a first substrate.

Specific parameters of the substrate of each Example and Comparative Example are shown in Table 1.

Table 1

| Sample | Thickness $a_1$ of the first substrate/mm | Yield strength $b_1$ of the first substrate/MPa | Thickness $a_2$ of the second substrate/mm | Tensile strength $b_2$ of the second substrate/MPa | $c_1$ of the second substrate | Thickness $a_3$ of the third substrate/ mm | Tensile strength $b_3$ of the third substrate/ MPa | $c_2$ of the third substrate | $a_1{\cdot}b_1$ $+a_2{\cdot}b_2{\cdot}c_1$ | $a_1{\cdot}b_1$ $+a_2{\cdot}b_2{\cdot}c_1$ $+a_3{\cdot}b_3{\cdot}c_2$ |
|---|---|---|---|---|---|---|---|---|---|---|
| Example 1 | 0.5 | 320 | 0.8 | 270 | 0.7 | / | / | / | 311.2 | / |
| Example 2 | 0.7 | 340 | 0.8 | 400 | 0.8 | / | / | / | 494 | / |
| Example 3 | 0.6 | 340 | 0.8 | 400 | 0.8 | / | / | / | 460 | / |
| Example 4 | 2 | 340 | 0.8 | 400 | 0.8 | / | / | / | 936 | / |
| Example 5 | 2.4 | 340 | 0.6 | 400 | 0.8 | / | / | / | 1008 | / |
| Example 6 | 0.6 | 220 | 0.6 | 340 | 0.8 | / | / | / | 295.2 | / |
| Example 7 | 0.7 | 260 | 0.8 | 400 | 0.8 | / | / | / | 438 | / |
| Example 8 | 0.7 | 540 | 0.8 | 400 | 0.8 | / | / | / | 634 | / |
| Example 9 | 0.7 | 780 | 0.8 | 400 | 0.8 | / | / | / | 802 | / |
| Example 10 | 0.7 | 800 | 0.8 | 400 | 0.8 | / | / | / | 816 | / |
| Example 11 | 0.6 | 400 | 0.6 | 260 | 0.5 | / | / | / | 318 | / |
| Example 12 | 0.7 | 340 | 0.6 | 400 | 0.6 | / | / | / | 382 | / |
| Example 13 | 0.7 | 340 | 0.8 | 400 | 0.7 | / | / | / | 462 | / |
| Example 14 | 0.7 | 340 | 2.0 | 400 | 0.9 | / | / | / | 958 | / |
| Example 15 | 0.6 | 260 | 0.6 | 240 | 0.8 | 0.5 | 220 | 0.5 | / | 326. 2 |
| Example 16 | 0.7 | 340 | 0.8 | 400 | 0.8 | 0.6 | 260 | 0.8 | / | 618. 8 |
| Example 17 | 0.7 | 340 | 0.8 | 400 | 0.8 | 1.2 | 260 | 0.8 | / | 743. 6 |
| Example 18 | 0.7 | 340 | 0.8 | 400 | 0.8 | 1.5 | 260 | 0.8 | / | 806 |
| Example 19 | 0.5 | 250 | 2.2 | 560 | 0.5 | / | / | / | 741 | / |
| Comparative Example 1 | 0.4 | 260 | 0.8 | 240 | 0.9 | / | / | / | 276.8 | / |
| Comparative Example 2 | 1.6 | 780 | 0.8 | 550 | 0.6 | / | / | / | 1512 | / |

The following performance tests are performed on the battery pack covers provided in the foregoing Examples and Comparative Examples:

Deformation: A force of 75 kgf was applied to a 10 mm diameter round bar to squeeze a side of the battery pack cover, and a depth of deformation was tested using a vernier scale and a level.

Thermal insulation performance: Time required for a temperature of the battery pack dropping from 20 °C to 0 °C in a -10 °C environment.

Electrical insulation and high-voltage withstand performance: DC 1000 V was applied to two main surfaces of the battery pack cover for 60s to test insulation resistance, with a test standard according to "GB/T 1408.1-2016 Electrical strength of insulating materials - Test methods - Part 1: Tests at power frequencies". AC 3000 V was applied to the two main surfaces of the battery pack cover for 60s, breakdown and sparking were recorded, and a leakage current was tested, with a test standard according to "GB/T 1408.1-2016 Electrical strength of insulating materials - Test methods - Part 1: Tests at power frequencies".

High-temperature and voltage withstand performance: A flame from a butane torch (with a flame temperature of about 1000 °C) was used to vertically spray the battery pack cover, and a side on which the composite material plate was located was placed in an outer flame region for 30 minutes, and an insulation withstand voltage of AC 1000 V was recorded after the fire.

Test results obtained were recorded in Table 2.

Table 2

| Sample | Extrusion deformation/ mm | Total thickness/ mm | Whether breakdown occurs | Whether sparking occurs | Leakage current/ mA | Whether a requirement for an insulation withstand voltage of AC 1000 V is satisfied |
|---|---|---|---|---|---|---|
| Example 1 | 1.8 | 1.3 | No | No | 2.3 | Yes |
| Example 2 | 1.5 | 1.5 | No | No | 2.4 | Yes |
| Example 3 | 1.6 | 1.4 | No | No | 2.3 | Yes |
| Example 4 | 1.2 | 2.8 | No | No | 2.7 | Yes |
| Example 5 | 0.9 | 3 | No | No | 2.8 | Yes |
| Example 6 | 1.9 | 1.2 | No | No | 2.8 | Yes |
| Example 7 | 1.8 | 1.5 | No | No | 2.6 | Yes |
| Example 8 | 1.4 | 1.5 | No | No | 2.2 | Yes |
| Example 9 | 1.1 | 1.5 | No | No | 2.7 | Yes |
| Example 10 | 1.1 | 1.5 | No | No | 2.7 | Yes |
| Example 11 | 1.8 | 1.2 | No | No | 2.9 | Yes |
| Example 12 | 1.6 | 1.3 | No | No | 2.6 | Yes |
| Example 13 | 1.5 | 1.5 | No | No | 2.5 | Yes |
| Example 14 | 1.1 | 2.7 | No | No | 2.3 | Yes |
| Example 15 | 1.8 | 1.7 | No | No | 2.8 | Yes |
| Example 16 | 1.3 | 2.1 | No | No | 2.4 | Yes |
| Example 17 | 1.1 | 2.7 | No | No | 2.6 | Yes |
| Example 18 | 0.9 | 3 | No | No | 2.6 | Yes |
| Example 19 | 1.7 | 2.7 | No | No | 2.8 | Yes |
| Comparative Example 1 | 2.3 | 1.2 | No | No | 2.3 | Yes |
| Comparative Example 2 | 0.8 | 2.4 | Yes | Yes | 3.5 | No |

The test results show that extrusion resistance, thermal insulation performance, high-voltage withstand performance, and high-temperature and high-voltage withstand performance of the battery pack covers in Examples 1 to 19 all meet a usage standard. Specifically, for the battery pack covers in Examples 1 to 19, when the force of 75 kgf is applied to the 10 mm diameter round bar to squeeze the sides of the battery pack covers, and the depths of deformation are tested using the vernier scale and the level, the deformation of the battery pack covers is less than 2 mm. For the battery pack covers in Examples 1 to 19, the time required for the temperatures of the battery packs to drop from 20 °C to 0 °C in a -10 °C environment is longer than 15h. According to "GB/T 1408.1-2016 Electrical strength of insulating materials - Test methods - Part 1: Tests at power frequencies", when DC 1000 V is applied to the two main surfaces of the battery pack covers in Examples 1 to 19 for 60s, the insulation resistance is greater than 50 GΩ. According to "GB/T 1408.1-2016 Electrical strength of insulating materials - Test methods - Part 1: Tests at power frequencies", when AC 3000 V is applied to the two main surfaces of the battery pack covers in Examples 1 to 19 for 60s, there is no breakdown or sparking, and the leakage currents are less than 3 mA. When the flame from the butane torch (with the flame temperature of about 1000 °C) is used to vertically spray the battery pack covers in Examples 1 to 19, and the sides on which the composite material plates are located are placed on fire in the outer flame region for 30 minutes, the requirement for the insulation withstand voltage of AC 1000 V is satisfied after the fire.

In Comparative Example 1, the thickness of the first substrate is 0.4 mm, and the yield strength of the first substrate is 260 MPa; and the thickness of the second substrate is 0.8 mm, the tensile strength of the second substrate is 240 MPa, and $c_1$ of the second substrate is 0.9, where $a_1 \cdot b_1 + a_2 \cdot b_2 \cdot c_1$ is 276.8, which does not satisfy $290 \leq a_1 \cdot b_1 + a_2 \cdot b_2 \cdot c_1 \leq 1200$. The thickness of the first substrate is excessively thin, and the extrusion resistance of the battery pack cover is poor. A force of 75 kgf is applied a 10 mm diameter round bar to squeeze a side of the battery pack cover, and extrusion deformation is 2.3 mm. In Comparative Example 2, the thickness of the first substrate is 1.6 mm, and the yield strength of the first substrate is 780 MPa; and the thickness of the second substrate is 0.8 mm, the tensile strength of the second substrate is 550 MPa, and $c_1$ of the second substrate is 0.6, where $a_1 \cdot b_1 + a_2 \cdot b_2 \cdot c_1$ is 1512, which does not satisfy $290 \leq a_1 \cdot b_1 + a_2 \cdot b_2 \cdot c_1 \leq 1200$. From the test results, it can be learned that when AC 3000 V is applied to both surfaces of the battery pack cover for 60s, breakdown and sparking occur, and a leakage current is 3.4 mA, which does not satisfy a performance requirement for the insulation withstand voltage.

Unless otherwise defined, all technical and scientific terms used in this application have the same meaning as commonly understood by a person skilled in the art to which this application belongs. All patents and publications referred to in this application are incorporated by reference in their entirety into this application. The term "include" or "comprise" is an open expression, that is, including the contents specified in this application but not excluding other contents.

In the descriptions of this specification, the reference terms "an embodiment", "another embodiment", and the like mean that the specific features, structures, materials or characteristics described with reference to the embodiment are included in at least one embodiment of this application. In this specification, the exemplary expressions of the foregoing terms need not be directed to the same embodiment or example. In addition, in the descriptions of this specification, the described specific features, structures, materials, or characteristics may be combined in a proper manner in any one or more of embodiments or examples. In addition, a person skilled in the art may combine and associate different embodiments or examples and features of different embodiments or examples described in this specification without mutual contradiction. In addition, it should be noted that the terms "first" and "second" in this specification are merely intended for a purpose of description, and shall not be understood as an indication or implication of relative importance or implicit indication of a quantity of indicated technical features.

Although embodiments of this application have been shown and described above, it is understood that the foregoing embodiments are exemplary and are not to be construed as limitations on this application. A person of ordinary skill in the art may change, modify, replace and vary the foregoing embodiments within the scope of this application.

## Claims

1. A battery pack cover (100), comprising:

    a first substrate (10), wherein a thickness of the first substrate (10) is $a_1$, in mm, and a yield strength of the first substrate (10) is $b_1$, in MPa; and
    a second substrate (20), wherein the second substrate (20) is a composite material plate, the second substrate (20) is located on a surface on a side of the first substrate (10), a thickness of the second substrate (20) is $a_2$, in mm, and a tensile strength of the second substrate (20) is $b_2$, in MPa, wherein
    the first substrate (10) and the second substrate (20) satisfy the following condition:

$$290 \leq a_1 \cdot b_1 + a_2 \cdot b_2 \cdot c_1 \leq 1200,$$

    wherein $c_1$ is a constant.

2. The battery pack cover (100) according to claim 1, wherein the first substrate (10) and the second substrate (20) satisfy the following condition:

$$320 \leq a_1 \cdot b_1 + a_2 \cdot b_2 \cdot c_1 \leq 1000.$$

3. The battery pack cover (100) according to claim 1, wherein $a_1$ is 0.5 mm to 2.4 mm, and $b_1$ is 220 MPa to 800 MPa.

4. The battery pack cover (100) according to claim 3, wherein the first substrate (10) is a metal plate.

5. The battery pack cover (100) according to claim 4, wherein the battery pack cover (100) further comprises a reinforcement structure, the reinforcement structure is a composite material plate, and the reinforcement structure is at least partially disposed around the metal plate.

6. The battery pack cover (100) according to claim 1, wherein an orthographic projection of the second substrate (20) onto the first substrate (10) is located inside the first substrate (10).

7. The battery pack cover (100) according to claim 1, wherein $a_2$ is 0.6 mm to 2 mm, $b_2$ is 240 MPa to 550 MPa, and $c_1$ is 0.5 to 0.9.

8. The battery pack cover (100) according to claim 1, further comprising: a third substrate (30), wherein the third substrate (30) is a composite material plate, the third substrate (30) is located on a surface on a side that is of the first substrate (10) and that is away from the second substrate (20), a thickness of the third substrate (30) is $a_3$, and a tensile strength of the third substrate (30) is $b_3$, wherein $290 \leq a_1 \cdot b_1 + a_2 \cdot b_2 \cdot c_1 + a_3 \cdot b_3 \cdot c_2 \leq 1200$, and $c_2$ is a constant.

9. The battery pack cover (100) according to claim 8, wherein $a_3$ is 0.6 mm to 2 mm, $b_3$ is 240 MPa to 550 MPa, and $c_2$ is 0.5 to 0.9.

10. The battery pack cover (100) according to any one of claims 5 to 9, wherein a material of the composite material plate comprises a matrix resin and a reinforcement fiber, the matrix resin comprises at least one of epoxy resin, polyamide resin, polyurethane resin, polyimide resin, polysulfone resin, and phenolic resin, and the reinforcement fiber comprises at least one of glass fiber and ceramic fiber.

11. A battery pack, comprising a battery, a tray (300), and the battery pack cover (100) according to any one of claims 1 to 10, wherein the battery pack cover (100) and the tray (300) are connected to form an accommodation cavity for accommodating the battery.

12. The battery pack according to claim 11, wherein the second substrate (20) is disposed toward the accommodation cavity.

13. A vehicle, comprising a vehicle body floor, wherein the vehicle body floor comprises the battery pack cover (100) according to any one of claims 1 to 10.

100

300

200

FIG. 1

30

10

20

FIG. 2

FIG. 3

FIG. 4

FIG. 5

First
direction

FIG. 6

## INTERNATIONAL SEARCH REPORT

| | International application No. |
|---|---|
| | **PCT/CN2024/075573** |

**A.    CLASSIFICATION OF SUBJECT MATTER**

H01M50/282(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 盖板, 上盖, 盖体, 上箱体, 厚度, 屈服强度, 拉伸强度, 抗拉强度, 第二, 板, 复合, 金属, batter+, cell?, cover, plate, upper, box, thickness, yield, strength, tensile, second, composite, metal

**C.    DOCUMENTS CONSIDERED TO BE RELEVANT**

| Category* | Citation of document, with indication, where appropriate, of the relevant passages | Relevant to claim No. |
|---|---|---|
| A | CN 216055057 U (BYD CO., LTD.) 15 March 2022 (2022-03-15)<br>description, paragraphs 37-82, and figures 1-5 | 1-13 |
| A | CN 107706328 A (GUANGZHOU XPENG AUTOMOBILE TECHNOLOGY CO., LTD.) 16 February 2018 (2018-02-16)<br>entire document | 1-13 |
| A | CN 115122896 A (CHINA FAW GROUP CO., LTD.) 30 September 2022 (2022-09-30)<br>entire document | 1-13 |
| A | CN 210692617 U (HENAN SENYUAN HEAVY INDUSTRY CO., LTD. et al.) 05 June 2020 (2020-06-05)<br>entire document | 1-13 |
| A | CN 216980769 U (BYD CO., LTD.) 15 July 2022 (2022-07-15)<br>entire document | 1-13 |
| A | WO 2017090676 A1 (MITSUBISHI PLASTICS, INC.) 01 June 2017 (2017-06-01)<br>entire document | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2024** | **07 May 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075573**

| Patent document cited in search report | | | Publication date (day/month/year) | Patent family member(s) | | | Publication date (day/month/year) |
|---|---|---|---|---|---|---|---|
| CN | 216055057 | U | 15 March 2022 | None | | | |
| CN | 107706328 | A | 16 February 2018 | None | | | |
| CN | 115122896 | A | 30 September 2022 | None | | | |
| CN | 210692617 | U | 05 June 2020 | None | | | |
| CN | 216980769 | U | 15 July 2022 | None | | | |
| WO | 2017090676 | A1 | 01 June 2017 | JPWO | 2017090676 | A1 | 06 September 2018 |
| | | | | JP | 6717321 | B2 | 01 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310131426X